Europäisches Patentamt

European Patent Office

Office européen des brevets

(11) Publication number: **0 115 197**
**B1**

(12) **EUROPEAN PATENT SPECIFICATION**

(45) Date of publication of patent specification: **30.03.88**

(21) Application number: **83307942.9**

(22) Date of filing: **23.12.83**

(51) Int. Cl.⁴: **G 11 B 5/127, G 11 B 5/265**

(54) Magnetic erasing head.

(30) Priority: **29.12.82 JP 233193/82**

(43) Date of publication of application:
**08.08.84 Bulletin 84/32**

(45) Publication of the grant of the patent:
**30.03.88 Bulletin 88/13**

(84) Designated Contracting States:
**AT DE FR GB NL**

(56) References cited:
**DE-A-2 826 559**
**DE-A-2 922 039**
**GB-A- 769 727**
**GB-A-2 050 038**
**US-A-4 180 835**

**Patent Abstracts of Japan vol. 4, no. 146, 15
October 1980 page 20P31 JP-A-55-93526**

(73) Proprietor: **SONY CORPORATION**
**7-35 Kitashinagawa 6-Chome Shinagawa-ku
Tokyo 141 (JP)**

(72) Inventor: **Yamashita, Keitaro
4-4748, Soubudai
Zama-shi Kanagawa-ken (JP)**
Inventor: **Tsuneki, Keizo
204-40, K-1 tou 401-gou Hitorizawa-cho Isogo-ku
Yokohama-shi Kanagawa-ken (JP)**

(74) Representative: **Ayers, Martyn Lewis Stanley
et al
J.A. KEMP & CO. 14 South Square Gray's Inn
London, WC1R 5EU (GB)**

## Description

The present invention relates generally to a tape recorder having a magnetic erasing transducer head and more particularly to a rotary magnetic erasing transducer head suitable for being applied to video tape recorders (VTRs) of various kinds.

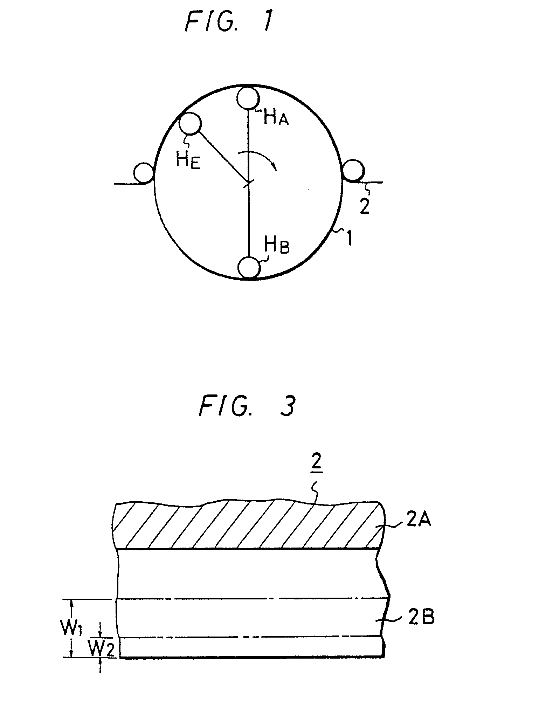

As, for example, shown in Figure 1, when a pair of rotary magnetic heads $H_A$ and $H_B$ are mounted on a rotary drum 1 with an angular distance of approximately 180 degrees therebetween and a helical video track is formed on a magnetic tape 2 which is wound around the rotary drum 1 with a wrapping angle of approximately 180 degrees, it is proposed to erase such video track by using a rotary magnetic head.

By way of example, as shown in Figure 1, a rotary erasing head $H_E$ is mounted on the rotary drum 1 at a predetermined angular displacement relative to one recording and/or reproducing rotary magnetic head $H_A$ by which a plurality of tracks can be erased simultaneously.

If the frequency of an erasing signal which is supplied to the rotary erasing head is high (the practical value is different depending on the kind of VTR), due to the core loss of the rotary head and so on, much power is required for the signal erasure. On the contrary, if the frequency of the erasing signal is low, the magnetization level caused by the erasing signal recorded on the magnetic tape is high and the wavelength of the erasing signal is long. Accordingly, unless the azimuth angle of the rotary erasing head relative to the recording and/or reproducing rotary magnetic head is selected to be large, the level of the reproduced erasing signal can not be reduced due to the azimuth loss. In practice, it is not so easy to produce the rotary erasing head having a large azimuth angle so in practice the level of the reproduced erasing signal can not be reduced so much, thus making the S/N (signal-to-noise) ratio poor and hence reducing the picture quality.

In the above case, when a magnetic tape having a high coercive force $H_c$ is used or a tracking pilot signal (a signal mode signal with a frequency of 100 to 150 kHz) is recorded together with a video signal, much more erasing power is necessary so that the influence due to the reproduced erasing signal becomes stronger.

In US—A—4 205 356, there is disclosed a tape recorder in accordance with the precharacterising part of claim 1 and having a double gap type or semi-double gap type erasing head in which after the erasing, the distortion ratio of the recorded signal can be reduced. However, in US—A—4 205 356, any relation between the gap and the erasing frequency is not referred to. In view of such aspect, it is considered that a higher degree of erasure could not be attained.

Accordingly, it is an object of the present invention to provide an improved magnetic erasing transducer head which can go at least some way towards overcoming the defects inherent in the prior art magnetic erasing transducer head.

According to the present invention, there is provided a video tape recorder having a magnetic erasing head, the head comprising:

(a) magnetic head core means having first and second end portions which oppose to each other to form a gap therebetween;

(b) magnetic center core means fixed to be situated between said first and second end portions to form first and second effective gaps between said first and second end portions of said magnetic head core means respectively, said magnetic center core means having a predetermined length in the width direction of said gaps, the width of said first effective gap being selected greater than that of said second effective gap, said first and second effective gaps being positioned at leading and trailing positions relative to a recording medium respectively;

(c) winding means for inducing a magnetic flux in said first and second effective gaps; and

(d) means for generating an erasing signal which is supplied to said winding means, said erasing signal having a predetermined frequency relative to said predetermined length of said magnetic center core means, characterised in that the respective widths of the gaps, the length of the magnetic core center means, and the frequency of the erasing signal having regard to the speed of the tape are selected such that the first gap magnetises the magnetisable surface coating of the tape to a substantially deeper extent than does the second gap and such that the residual magnetism caused by the erase fluxes forms closed loops in the magnetisable surface coating of the tape.

Other, optional features of the invention are defined in the sub-claims.

The above and other features and advantages of the present invention will become apparent from the following description, given by way of example taken in conjunction with the accompanying drawings through which the like references designate the same elements and parts. In the drawings:—

Figure 1 is a diagram of a rotary magnetic head assembly useful for explaining the present invention;

Figure 2 is a cross-sectional diagram showing an embodiment of a rotary magnetic erasing transducer head of semi-double gap type according to the present invention;

Figure 3 and Figures 4A to 4C are respectively diagrams used to explain the operation of the rotary magnetic erasing transducer head shown in Figure 2;

Figure 5 is a cross-sectional diagram showing another embodiment of a rotary magnetic erasing transducer head of double gap type according to the present invention; and

Figures 6A to 6C are respectively diagrams used to explain the operation thereof.

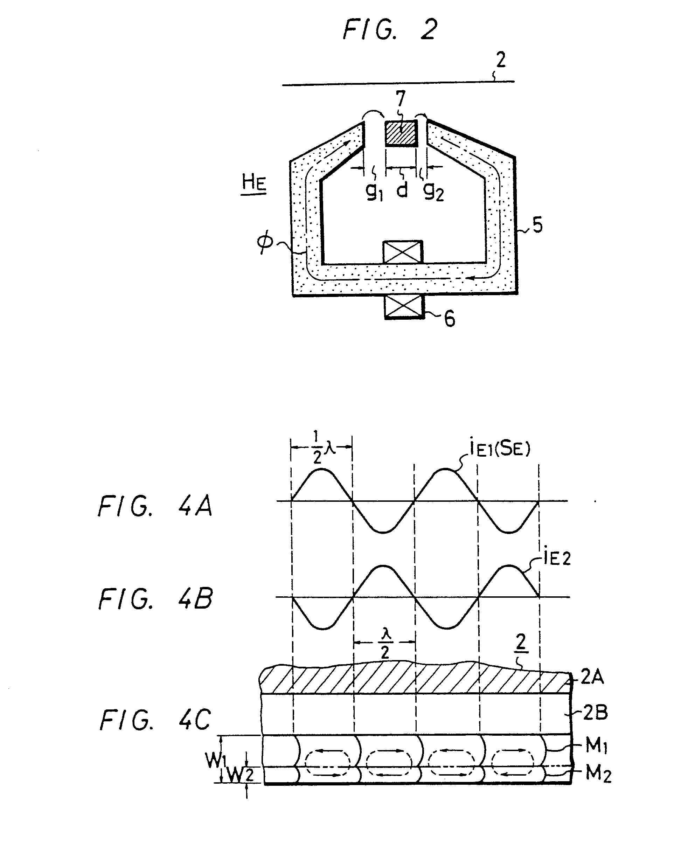

Now, a magnetic erasing transducer head according to the present invention will hereinafter be described in detail with reference to Figure 2 and the following. In the embodiments, the present invention is applied to the rotary magnetic head assembly shown in Figure 1.

Figure 2 is a cross-sectional diagram showing an example of a rotary magnetic erasing transducer head $H_E$ according to the invention. In this embodiment, the rotary magnetic erasing transducer head $H_E$ is constructed as the semi-double gap type. Namely, around a head core 5 is wound a signal winding 6 and a center shim 7 is interposed between both the magnetic poles or ends of the head core 5. Although the center shim 7 may be formed by different methods depending on its length $d$, the center shim 7 can be formed by employing a method such as bonding thin plates, sputtering and the like.

Of two effective gaps formed by the interposition of the center shim 7 between the magnetic poles of the head core 5, if the gap which leads relative to the rotation direction of the head $H_E$ is taken as $g_1$ and the gap which succeeds relative thereto is taken as $g_2$, the relation between the widths of the two gaps $g_1$ and $g_2$ is selected so as to satisfy

$$g_1 > g_2 \qquad (1)$$

When the relation between the gaps $g_1$ and $g_2$ is selected as described above and an erasing current is passed to the signal winding 6, the erasing efficiency can be raised by the double erasing by the gaps $g_1$ and $g_2$. Namely, the recorded signal on the tape 2 can be erased with a small erasing power.

Since the main erasing of the signal is carried out by the magnetic field induced across the gap $g_1$, the value of the erasing current supplied to the winding 6 is determined in such a manner that the magnetic field generated by the gap $g_1$ may be strong enough to erase the recorded signal. The depth $w_1$ to which magnetization of the magnetic layer 2B of the magnetic tape 2 is caused by the magnetic field $h_1$ generated from the gap $g_1$ at that time is shown by a one-dot chain line in Figure 3. As seen in the above, the large gap $g_1$ brings about a relatively deep magnetization in the magnetic layer 2B. (In Figure 3, reference numeral 2A designates a substrate or base of the tape 2 on which the magnetic layer 2B is formed).

On the other hand, since the succeeding gap $g_2$ satisfies the condition $g_2 > g_1$, the magnetization formed by a magnetic field $h_2$ ($h_2 = h_1$) generated by the gap $g_2$ does not go so deep but as shown, for example, by the two-dot chain line in Figure 3, only the surface region of the magnetic layer 2B is thereby magnetized. In this case, the depth of the magnetization is represented by $w_2$.

According to the invention, the double erasing by two gaps $g_1$ and $g_2$ is carried out and the length of the center shim 7 is selected in such a manner that the residual magnetic flux (residual magnetism) of the tape 2 caused by the erasing signal may be reduced to substantially zero. More particularly, the length $d$ of the center shim 7 relative to the wavelength $\lambda$ of the erasing

signal on the tape determined by the kind of the VTR set is selected to as to satisfy

$$d \simeq (n + \frac{1}{2}) \lambda \qquad (2)$$

where $n$ is an integer.

The value of the erasing signal is selected in consideration of the frequency band of the video signal to be processed, the relative speed between the tape and the head, the level of erasing noise based on the residual magnetic flux on the tape caused by the erasing signal, further the restriction of upper and lower limit values of the above erasing frequency and so on. Accordingly, in a certain VTR set, when the wavelength $\lambda$ of the erasing signal is selected as, for example, 1 μm, the erasing frequency becomes 3.8 MHz or 10 MHz.

When the length $d$ of the center shim 7 is selected to satisfy the equation (2), if the erasing signal $S_E$ supplied to the signal winding 6 changes as shown in Figure 4A, an erasing flux $i_{E1}$ which changes in the same way as in the erasing signal $S_E$ is passed through the gap $g_1$. Therefore, a magnetization pattern $M_1$ as shown in Figure 4C is formed thereby in the magnetic layer 2B.

Since the gap $g_2$ is spaced apart from the gap $g_1$ by the length $d$ as shown in Figure 2, when the same point is moved from the gap $g_1$ to the gap $g_2$, the erasing flux $i_{E2}$ flowing through gap $g_2$ becomes opposite in phase relative to the erasing flux $i_{E1}$ as shown in Figure 4B. Because of the semi-double gap type construction, under the same signal current, the direction of the magnetic fields becomes the same as shown by an arrow φ in Figure 2.

As a result, if the magnetization pattern caused by the erasing flux $i_{E1}$ is as shown by $M_1$ in Figure 4C, and the magnetization pattern caused by the erasing flux $i_{E2}$ is as shown by $M_2$ in Figure 4C, the magnetization pitch thereof becomes the same as that by the erasing flux $i_{E1}$ but the magnetization direction thereof becomes opposite in phase. Consequently, within the tape 2, there is formed a closed loop as indicated by the broken line so that the residual magnetism based on the erasing current does not appear on the outside. As a result, even when the tape 2 is read by the reproduction head, the reproduced erasing signal becomes zero and thereby no deterioration of the S/N ratio caused by the reproduced erasing signal is produced.

In the case of double erasure, when the relation is not selected so as to satisfy the equation (2), a perfect closed loop is not formed within the tape 2 so that the erasing noise due to the residual magnetism is produced.

As described above, when double erasure is performed and the length $d$ of the center shim 7 is selected so as to satisfy the equation (2), the residual magnetism due to the erasing current does not occur for the outside of the tape 2. Thus, no erasing noise appears and hence the S/N ratio of the video signal can be improved.

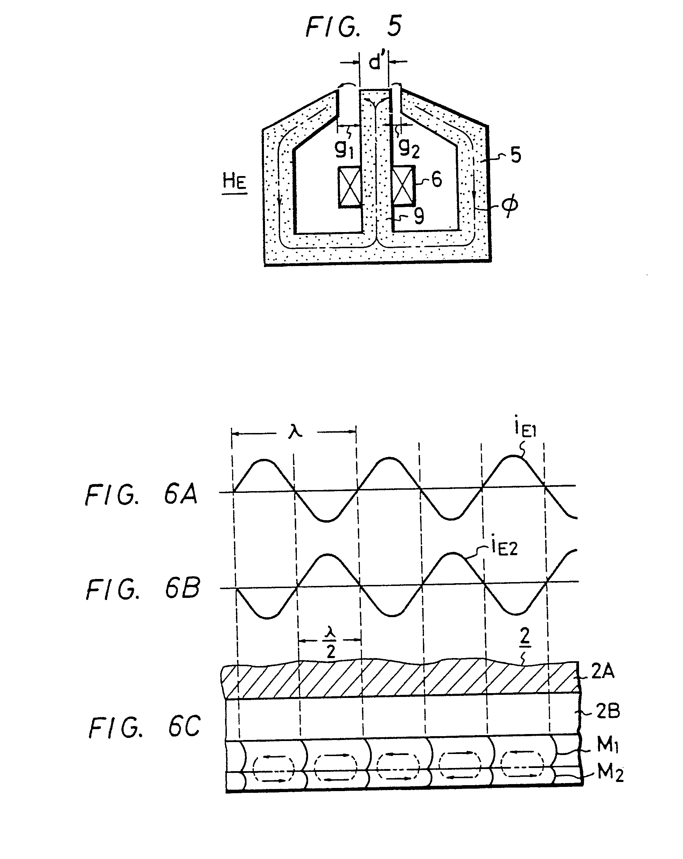

Figure 5 shows a case in which the present invention is applied to a magnetic erasing transducer head of double gap type. As shown in Figure 5, there is provided, at the center of the head core 5, a magnetic center core 9. Around this magnetic center core 9 is wound the signal winding 6 and the magnetic gap formed between both ends of the head core 5 is divided into two gaps $g_1$ and $g_2$ by the tip or top end of the magnetic center core 9.

The relation between the two gaps $g_1$ and $g_2$ is selected so as to satisfy the condition of $g_1 > g_2$ as above, while the length or width $d'$ of the magnetic center core 9, unlike the equation (2), is selected so as to satisfy the equation as given by

$$d' = n\,\lambda \qquad (3)$$

The reason for this will be described below. In the magnetic erasing transducer head of double gap type, even when the same erasing current is supplied to the winding 6, the direction of the magnetization formed by the gap $g_1$ and the direction of the magnetization formed by the gap $g_2$ are inverted relative to each other. Accordingly, if the equation (3) is satisfied, the erasing flux $i_{E1}$ which flows through the gap $g_1$ and the erasing flux $i_{E2}$ which flows through the gap $g_2$ also become opposite to each other in phase (refer to Figures 6A and 6B) so that the magnetization directions of the tape 2 thereby become opposite in polarity.

With the construction thus produced, the closed loop is formed by the residual magnetic fluxes generated in the upper and lower magnetic layers 2B of the tape as shown in Figure 6C, so that the same effect as above can be achieved.

As set forth above, owing to the double erasure method, the erasing efficiency can be raised with small erasing power and the residual magnetic flux components on the tape caused by the erasing signal are reduced substantially to zero. As a result, no erasing noise is generated and hence the S/N ratio and picture quality are improved.

**Claims**

1. a video tape recorder having a magnetic erasing head, the head comprising:

(a) magnetic head core means (5) having first and second end portions which oppose to each other to form a gap therebetween;

(b) magnetic center core means (7, 9) fixed to be situated between said first and second end portions to form first and second effective gaps ($g_1$, $g_2$) between said first and second end portions of said magnetic head core means respectively, said magnetic center core means having a predetermined length (d) in the width direction of said gaps, the width of said first effective gap ($g_1$) being selected greater than that of said second

effective gap ($g_2$), said first and second effective gaps being positioned at leading and trailing positions relative to a recording medium (2) respectively;

(c) winding means (6) for inducing a magnetic flux in said first and second effective gaps; and

(d) means for generating an erasing signal which is supplied to said winding means, said erasing signal having a predetermined frequency relative to said predetermined length of said magnetic center core means, characterised in that the respective widths of the gaps, the length of the magnetic core centre means, and the frequency of the erasing signal having regard to the speed of the tape are selected such that the first gap magnetises the magnetisable surface coating of the tape to a substantially deeper extent than does the second gap and such that the residual magnetism caused by the erase fluxes forms closed loops in the magnetisable surface coating of the tape.

2. A recorder according to claim 1 wherein the erase fluxes generated by the gaps ($g_1$, $g_2$) are out of phase relative to one another.

3. A recorder according to claim 1 or 2, in which said center core means is separated from said magnetic center core means so that said magnetic erasing head is of semi-double gap construction.

4. A recorder according to claim 3, in which the relationship between said wavelength of said erasing signal on the tape and said length of said magnetic center core means is selected so as to satisfy the following equation:—

$$d \simeq (n + \frac{1}{2})\,\lambda$$

wherein
n = an integer
d = length of the magnetic center core
$\lambda$ = wavelength of the erasing signal on the tape.

5. A recorder according to claim 1 or 2, in which said center core means is unitary with said magnetic head core means so that said magnetic erasing head is of double gap erasing head construction.

6. A recorder according to claim 5, in which the relationship between said wavelength of said erasing signal and said length of said magnetic center core means is selected so as to satisfy the following equation

$$d \simeq n\,\lambda$$

wherein
n = an integer
d = length of the magnetic center core
$\lambda$ = wavelength of the erasing signal on the tape.

## Patentansprüche

1. Videorecorder mit einem magnetischen Löschkopf mit

(a) einem Magnetkopf-Kern (5) mit einem ersten und einem zweiten Endbereich, die einander gegenüberliegen und zwischen sich einen Luftspalt bilden,

(b) einem magnetischen Zentralkern (7, 9), der so fixiert ist, daß er zwischen dem ersten und dem zweiten Endbereich liegt und mit dem ersten bzw. dem zweiten Endbereich des Magnetkopf-Kerns einen ersten und einen zweiten effektiven Luftspalt ($g_1$ bzw. $g_2$) bildet, wobei der magnetische Zentralkeren in Breitenrichtung des genannten Luftspalts eine vorbestimmte Länge (d) besitzt und die Breite des ersten effektiven Luftspalts ($g_1$) größer ist als diejenige des zweiten effektiven Luftspalts ($g_2$) und wobei der erste und der zweite effektive Luftspalt sich relativ zu einem Aufzeichnungsmedium (2) in einer voreilenden bzw. einer nacheilenden Position befinden,

(c) einer Wicklung (6) zur Induzierung eines magnetischen Flusses in dem ersten und dem zweiten effektiven Luftspalt sowie

(d) eine Einrichtung zur Erzeugung eines der Wicklung (6) zuführbaren Löschsignals, das relativ zu der gennanten vorbestimmten Länge des magnetischen Zentralkerns eine vorbestimmte Frequenz besitzt, dadurch gekennzeichnet, daß die jeweiligen Breiten der effektiven Luftspalte, ferner die Länge des magnetischen Zentralkerns sowie die Frequenz des Löschsignals unter Berücksichtigung der Bandgeschwindigkeit so gewählt sind, daß der erste Luftspalt die magnetisierbare Oberflächenbeschichtung des Bandes wesentlich tiefer magnetisiert als der zweite Luftspalt und die von dem Löschfluß verursachte Restmagnetisierung in der magnetisierbaren Oberflächenbeschichtung des Bandes geschlossene Schleifen bildet.

2. Rekorder nach Anspruch 1, bei dem die von den Luftspalten ($g_1$, $g_2$) erzeugten Löschflüsse miteinander nicht in Phase sind.

3. Rekorder nach Anspruch 1 oder 2, bei dem der magnetische Zentralkern von dem Magnetkopf-Kern getrennt ist, so daß der magnetische Löschkopf eine Halb-Doppel-Luftspalt-Konstruktion darstellt.

4. Rekorder nach Anspruch 3, bei dem die Beziehung zwischen der Wellenlänge des Löschsignals auf dem Band und der Länge des magnetischen Zentralkerens so gewählt sind, daß die Gleichung

$$d \simeq (n + \frac{1}{2}) \lambda$$

erfüllt ist, worin
n = ganze Zahl
d = Länge des magnetischen Zentralkerns
λ = Wellenlänge des Löschsignals auf dem Band bedeuten.

5. Rekorder nach Anspruch 1 oder 2, bei dem der magnetische Zentralkeren einstückig mit dem Magnetkopf-Kern ausgebildet ist, so daß magnetische Löschkopf eine Doppel-Luftspalt-Löschkopf-Konstruktion darstellt.

6. Rekorder nach Anspruch 5, bei dem die Beziehung zwischen der Wellenlänge des Löschsignals auf dem Band und der Länge des magnetischen Zentralkerns so gewählt sind, daß die Gleichung

$$d \simeq n \lambda$$

erfüllt ist, worin
n = ganze Zahl
d = Länge des magnetischen Zentralkerns
λ = Wellenlänge des Löschsignals auf dem Band bedeuten.

## Revendications

1. Magnétoscope ayant une tête magnétique d'effacement, la tête comprenant:

(a) un noyau (5) de tête magnétique ayant une première et une seconde partie d'extrémité placées l'une en face de l'autre afin qu'elles forment un entrefer entre elles,

(b) un noyau magnétique central (7, 9) fixé de manière qu'il soit placé entre la première et la seconde partie d'extrémité et forme un premier et un second entrefer efficace ($g_1$, $g_2$) entre la première et la seconde partie d'extrémité du noyau de la tête magnétique, le noyau magnétique central ayant une dimension prédéterminée (d) dans la direction de la largeur des entrefers, la largeur du premier entrefer efficace ($g_1$) étant choisie de manière qu'elle soit supérieure à celle du second entrefer efficace ($g_2$), le premier et le second entrefer efficace étant disposés à des emplacements antérieur et postérieur par rapport à un support d'enregistrement (2) respectivement,

(c) un dispositif (6) à enroulement destiné à induire un flux magnétique dans le premier et le second entrefer efficace, et

(d) un dispositif générateur d'un signal d'effacement que est transmis au dispositif à enroulement, le signal d'effacement ayant une fréquence prédéterminée par rapport à la longueur prédéterminé du noyau magnétique central, caractérisé en ce que les largeurs respectives des entrefers, la longueur du noyau magnétique central et la fréquence du signal d'effacement compte tenu de la vitesse de la bande magnétique, sont choisis de manière que le premier entrefer aimante le revêtement superficiel aimantable de la bande magnétique à une profondeur nettement supérieure à celle que donne le second entrefer, et de manière que le magnétisme résiduel dû aux flux d'effacement forme des boucles fermées dans le revêtement superficiel aimantable de la bande magnétique.

2. Magnétoscope selon la revendication 1, dans lequel les flux d'effacement créés par les entrefers ($g_1$, $g_2$) sont déphasés les uns par rapport aux autres.

3. Magnétoscope selon l'une des revendications 1 et 2, dans lequel le noyau central est séparé du noyau magnétique si bien que la tête magnétique d'effacement a une construction à entrefer semi-double.

4. Magnétoscope selon la revendication 3, dans lequel la relation entre la longueur d'onde du signal d'effacement appliqué à la bande magnétique et la longueur du noyau magnétique central est choisie de manière qu'elle satisfasse à l'équation suivante:

$$d \simeq (n + \frac{1}{2}) \lambda$$

dans laquelle n est nombre entier, d est la longueur du noyau magnétique central, et $\lambda$ est la longueur d'onde du signal d'effacement appliqué à la bande magnétique.

5. Magnétoscope selon l'une des revendications 1 et 2, dans lequel le noyau central est réalisé en une seule pièce avec le noyau de la tête magnétique si bien que la tête magnétique d'effacement a une construction à double entrefer.

6. Magnétoscope selon la revendication 5, dans lequel la relation entre la longueur d'onde du signal d'effacement et la longueur du noyau magnétique central est choisie de manière qu'elle satisfasse l'équation suivante:

$$d \simeq n \lambda$$

dans laquelle n est un nombre entier, d est la longueur du nouay magnétique central et $\lambda$ est la longueur du signal d'effacement appliqué à la bande magnétique.

## FIG. 1

## FIG. 3

*FIG. 2*

*FIG. 4A*

*FIG. 4B*

*FIG. 4C*

## FIG. 5

## FIG. 6A

## FIG. 6B

## FIG. 6C